# EUROPEAN PATENT APPLICATION

(11) **EP 4 020 424 A1**
(43) Date of publication of application: **29.06.2022**
(21) Application number: 21209455.1
(22) Date of filing: 22.11.2021
(51) Int. Cl.: G08G 1/01, G08G 1/017, G08G 1/052, G06V 20/52, H04N 7/18, H04W 4/46

(54) **EDGE AUTOMATIC AND ADAPTIVE PROCESSING ACTIVATIONS**

(30) Priority: 26.12.2020 US 202017134291
(71) Applicant: INTEL Corporation, Santa Clara, CA 95054 (US)
(72) Inventor: GUIM BERNAT, Francesc, 08036 Barcelona (ES); KUMAR, Karthik, Chandler, AZ, 85249 (US); WOUHAYBI, Rita H., Portland, OR, 97229 (US); CARRANZA, Marcos E., Portland, OR, 97229 (US); MARTINEZ-SPESSOT, Cesar, Hillsboro, OR, 97123 (US)
(74) Representative: Maiwald Patent- und Rechtsanwaltsgesellschaft mbH

(57) **Abstract**

Various aspects of methods, systems, and use cases include coordinate operations based on event occurrence. A method may include processing a captured image to determine whether an event has occurred. The method may include detecting that the event has occurred by comparing an attribute of the image with a selected criterion, and sending, in response to detecting the event, an activation function to a network interface component (NIC). The NIC may be at a remote device, such as in an edge appliance, in a remote image capture device, or the like. The activation function may activate a bit-stream corresponding to the event, such as to activate an accelerator.

## Description

### BACKGROUND

Edge computing, at a general level, refers to the implementation, coordination, and use of computing and resources at locations closer to the "edge" or collection of "edges" of the network. The purpose of this arrangement is to improve total cost of ownership, reduce application and network latency, reduce network backhaul traffic and associated energy consumption, improve service capabilities, and improve compliance with security or data privacy requirements (especially as compared to conventional cloud computing). Components that can perform edge computing operations ("edge nodes") can reside in whatever location needed by the system architecture or ad hoc service (e.g., in an high performance compute data center or cloud installation; a designated edge node server, an enterprise server, a roadside server, a telecom central office; or a local or peer at-the-edge device being served consuming edge services).

Applications that have been adapted for edge computing include but are not limited to virtualization of traditional network functions (e.g., to operate telecommunications or Internet services) and the introduction of next-generation features and services (e.g., to support 5G network services). Use-cases which are projected to extensively utilize edge computing include connected self-driving cars, surveillance, Internet of Things (IoT) device data analytics, video encoding and analytics, location aware services, device sensing in Smart Cities, among many other network and compute intensive services.

Edge computing may, in some scenarios, offer or host a cloud-like distributed service, to offer orchestration and management for applications and coordinated service instances among many types of storage and compute resources. Edge computing is also expected to be closely integrated with existing use cases and technology developed for IoT and Fog/distributed networking configurations, as endpoint devices, clients, and gateways attempt to access network resources and applications at locations closer to the edge of the network.

A new era of compute is emerging in which intensive compute operations are no longer performed primarily in data centers at the core of a network. Rather, with new data transport technologies, such as 5G and new types of fabrics (e.g., network architectures), compute resources may be placed in locations that are remote from a conventional data center. For example, compute resources may be available both in cell towers, base stations, and central offices. Furthermore, given their remote placement (e.g., remote from the core of a network), many of the compute devices that will perform the compute operations may obtain power from solar cells (photovoltaic cells), wind turbines, or other sources that may provide a smaller and less reliable supply of power than a connection to a power distribution grid. As such, the compute capacity at the remote compute locations may fluctuate with the availability of power, leading to an inability to guarantee a fixed level of performance (e.g., a target quality of service, such as a target latency, a target throughput, and/or other performance metrics that may be specified in a service level agreement between a user (client) of the compute resources and a provider of the compute resources).

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an overview of an edge cloud configuration for edge computing.
FIG. 2 illustrates operational layers among endpoints, an edge cloud, and cloud computing environments.
FIG. 3 illustrates an example approach for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates a compute and communication use case involving mobile access to applications in an edge computing system.
FIG. 7A provides an overview of example components for compute deployed at a compute node in an edge computing system.
FIG. 7B provides a further overview of example components within a computing device in an edge computing system.
FIG. 7C illustrates an example software distribution platform to distribute software in accordance with some embodiments.
FIG. 8 illustrates architecture topology for cloud or edge services in accordance with some embodiments.
FIG. 9 illustrates network architecture arrangements in accordance with some embodiments.
FIGS. 10-11 illustrate diagrams showing data flow based on event detection in accordance with some embodiments.
FIGS. 12-13 illustrate example deployments for an event detection system in accordance with some embodiments.
FIG. 14 illustrates an architecture for implementing event detection techniques in accordance with some embodiments.
FIG. 15 illustrates a flowchart showing a technique for coordinating operations based on event occurrence in accordance with some embodiments.

### DETAILED DESCRIPTION

The following embodiments generally relate to coordinating operations in an edge network based on event occurrence. Event occurrence may be identified using a limited processing device (e.g., an integrated circuit, such as a system on a chip (SoC), a field-programmable gate array (FPGA), or other processing circuitry) for example based on an image from an image capture device (e.g., a camera).

In an example, an edge server is used for processing events, which requires significant additional data travel time, processor usage, which is often unnecessary. Sending data to an edge server for trivial computations and significant communications adds round trip latency. An edge server is resource constrained and may become a bottleneck, especially in times of high load, as well as representing a single point of failure. When deployed in a city, such as one growing at a fast pace, horizontally scaling by adding more servers may be difficult, considering device footprint (e.g., physical space availability). In times of high load, with an arbitrary high number of connected clients, the delays may result in a cascade of latency adders.

In contrast, the systems and methods described herein use a distributed peer-to-peer or event-based determination to process events. These systems and methods provide benefits in terms of system complexity and scalability of their architecture. Additionally, the systems and methods described herein may be used in related technical implementations relate to third party applications.

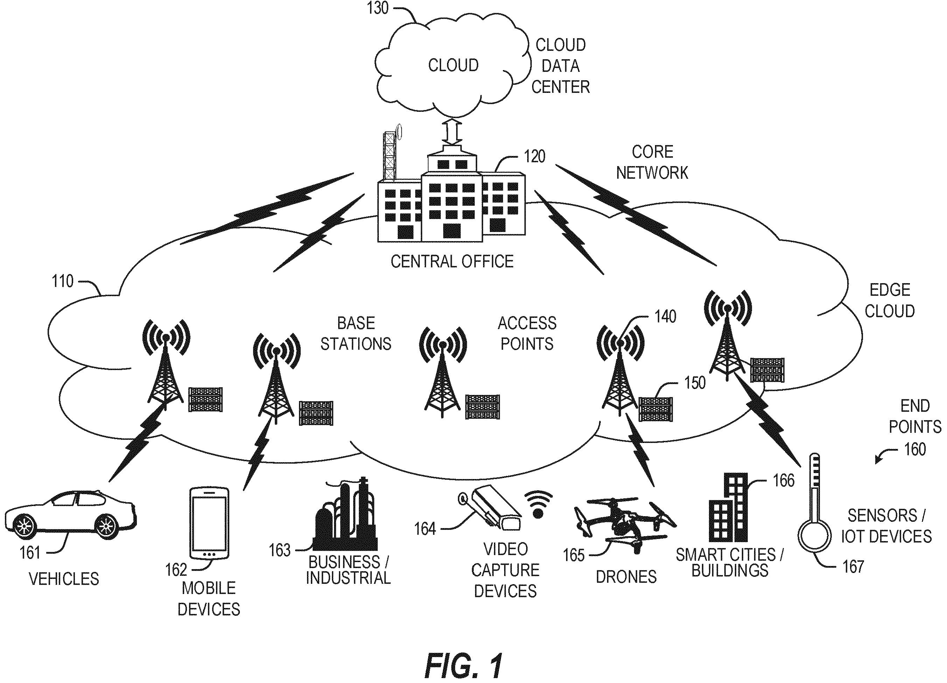

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

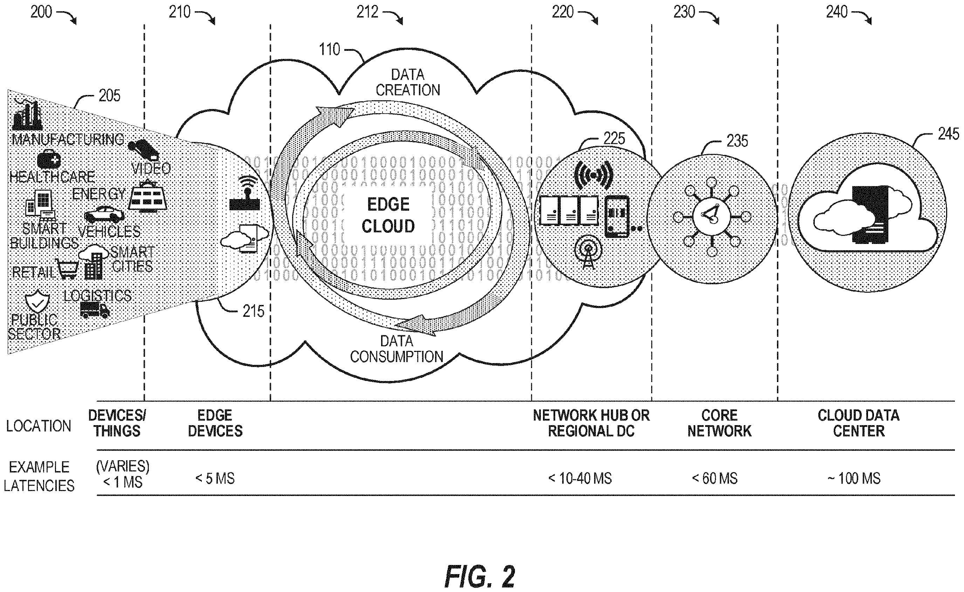

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

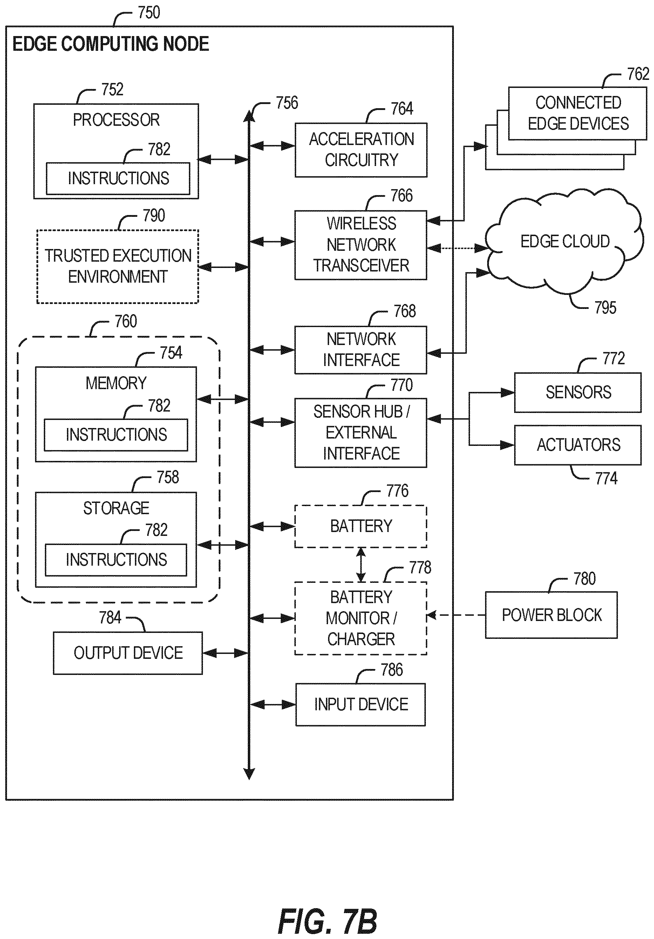

The network components of the edge cloud 110 may be servers, multi-tenant servers, appliance computing devices, and/or any other type of computing devices. For example, the edge cloud 110 may be an appliance computing device that is a self-contained processing system including a housing, case or shell. In some cases, edge devices are devices presented in the network for a specific purpose (e.g., a traffic light), but that have processing or other capacities that may be harnessed for other purposes. Such edge devices may be independent from other networked devices and provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 7B. The edge cloud 110 may also include one or more servers and/or one or more multi-tenant servers. Such a server may implement a virtual computing environment such as a hypervisor for deploying virtual machines, an operating system that implements containers, etc. Such virtual computing environments provide an execution environment in which one or more applications may execute while being isolated from one or more other applications.

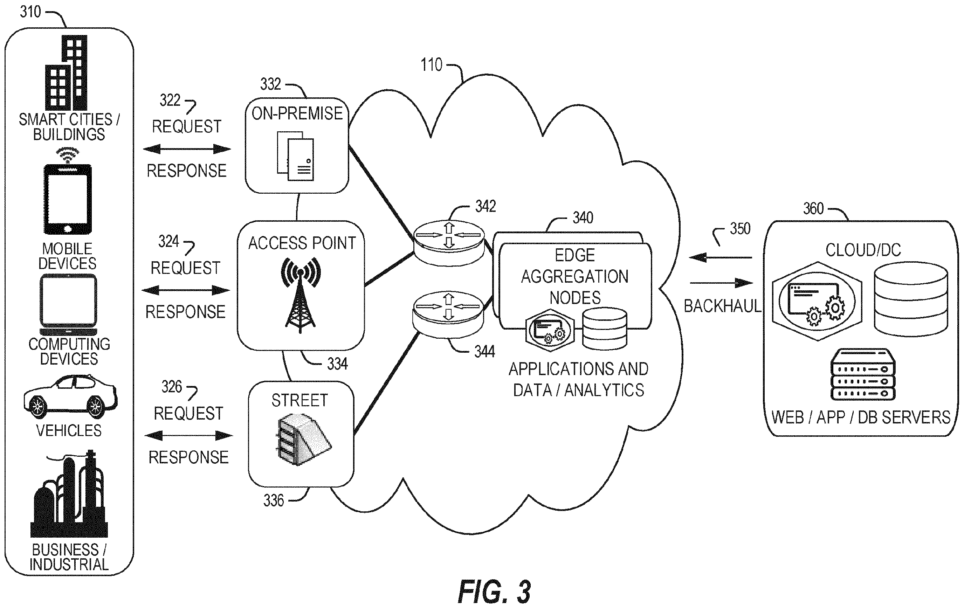

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

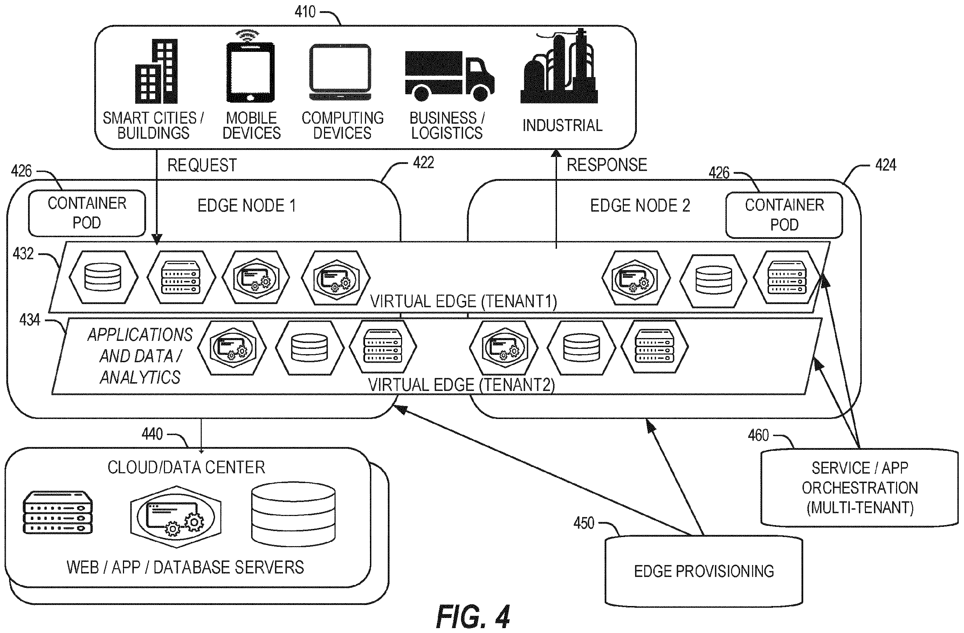

FIG. 4 illustrates deployment and orchestration for virtual edge configurations across an edge computing system operated among multiple edge nodes and multiple tenants. Specifically, FIG. 4 depicts coordination of a first edge node 422 and a second edge node 424 in an edge computing system 400, to fulfill requests and responses for various client endpoints 410 (e.g., smart cities / building systems, mobile devices, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices in 410 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective RoTs spanning devices 410, 422, and 440 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

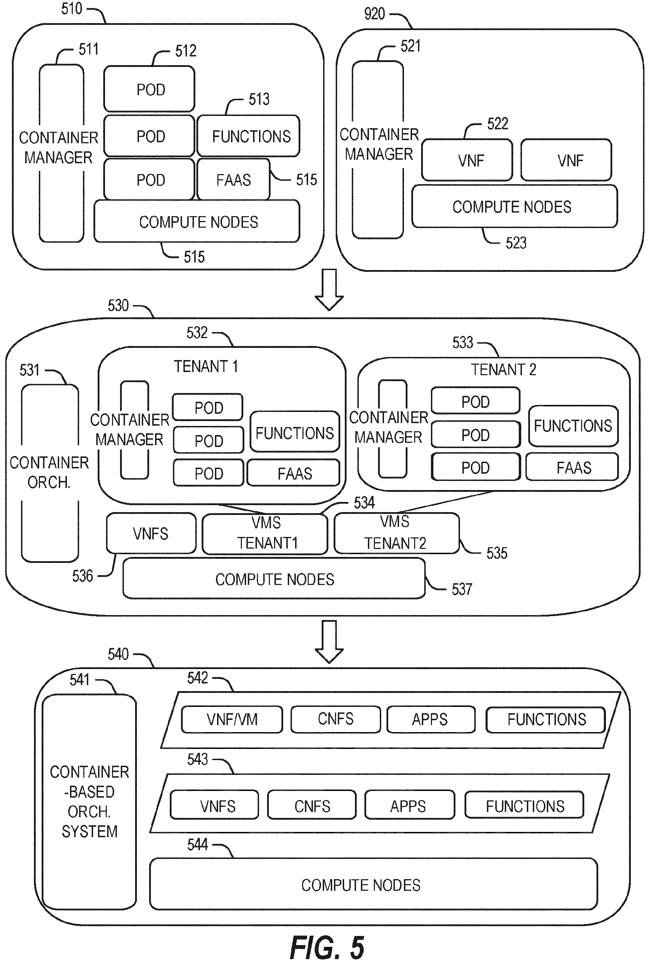

FIG. 5 illustrates additional compute arrangements deploying containers in an edge computing system. As a simplified example, system arrangements 510, 520 depict settings in which a pod controller (e.g., container managers 511, 521, and container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

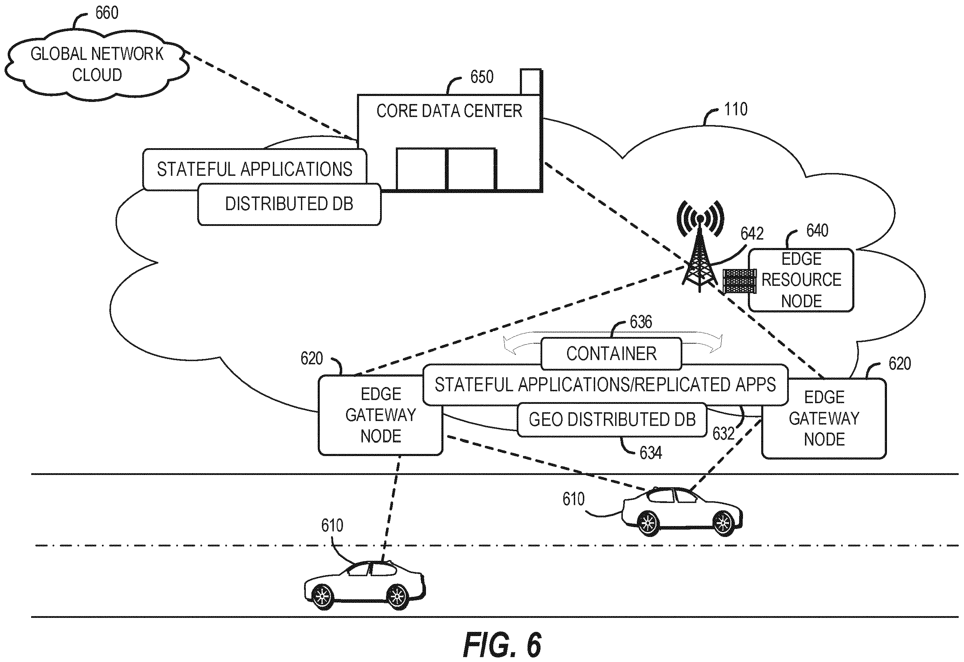

It should be appreciated that the edge computing systems and arrangements discussed herein may be applicable in various solutions, services, and/or use cases involving mobility. As an example, FIG. 6 shows a simplified vehicle compute and communication use case involving mobile access to applications in an edge computing system 600 that implements an edge cloud 110. In this use case, respective client compute nodes 610 may be embodied as in-vehicle compute systems (e.g., in-vehicle navigation and/or infotainment systems) located in corresponding vehicles which communicate with the edge gateway nodes 620 during traversal of a roadway. For instance, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular edge gateway device 620 may propagate so as to maintain a consistent connection and context for the client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway devices 620.

The edge gateway devices 620 may communicate with one or more edge resource nodes 640, which are illustratively embodied as compute servers, appliances or components located at or in a communication base station 642 (e.g., a based station of a cellular network). As discussed above, the respective edge resource nodes 640 include an amount of processing and storage capabilities and, as such, some processing and/or storage of data for the client compute nodes 610 may be performed on the edge resource node 640. For example, the processing of data that is less urgent or important may be performed by the edge resource node 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource nodes 640 may offer the use of stateful applications 632 and a geographic distributed database 634. Although the applications 632 and database 634 are illustrated as being horizontally distributed at a layer of the edge cloud 110, it will be understood that resources, services, or other components of the application may be vertically distributed throughout the edge cloud (including, part of the application executed at the client compute node 610, other parts at the edge gateway nodes 620 or the edge resource nodes 640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from an edge node 620 to other edge nodes (e.g., 620, 640, etc.) such that the container with an application and workload does not need to be reconstituted, re-compiled, re-interpreted in order for migration to work. However, in such settings, there may be some remedial or "swizzling" translation operations applied. For example, the physical hardware at node 640 may differ from edge gateway node 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 782 of FIG. 7B, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 782 of FIG. 7B. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 782 of FIG. 7B, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 782 from the edge provisioning node 644. For example, the software instructions, which may correspond to the example computer readable instructions 782 of FIG. 7B, may be downloaded to the example processor platform/s, which is to execute the computer readable instructions 782 to implement the methods described herein.

In some examples, the processor platform(s) that execute the computer readable instructions 782 can be physically located in different geographic locations, legal jurisdictions, etc. In some examples, one or more servers of the edge provisioning node 644 periodically offer, transmit, and/or force updates to the software instructions (e.g., the example computer readable instructions 782 of FIG. 7B) to ensure improvements, patches, updates, etc. are distributed and applied to the software instructions implemented at the end user devices. In some examples, different components of the computer readable instructions 782 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

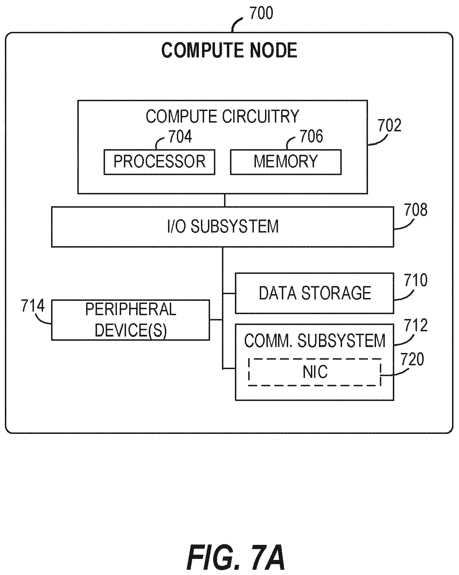

In further examples, any of the compute nodes or devices discussed with reference to the present edge computing systems and environment may be fulfilled based on the components depicted in FIGS. 7A and 7B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 7A, an edge compute node 700 includes a compute engine (also referred to herein as "compute circuitry") 702, an input/output (I/O) subsystem 708, data storage 710, a communication circuitry subsystem 712, and, optionally, one or more peripheral devices 714. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 700 may be embodied as any type of engine, device, or collection of devices capable of performing various compute functions. In some examples, the compute node 700 may be embodied as a single device such as an integrated circuit, an embedded system, a field-programmable gate array (FPGA), a system-on-a-chip (SOC), or other integrated system or device. In the illustrative example, the compute node 700 includes or is embodied as a processor 704 and a memory 706. The processor 704 may be embodied as any type of processor capable of performing the functions described herein (e.g., executing an application). For example, the processor 704 may be embodied as a multi-core processor(s), a microcontroller, a processing unit, a specialized or special purpose processing unit, or other processor or processing/controlling circuit.

In some examples, the processor 704 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 704 may work in coordination with each other to execute many types of operations and instructions within and on behalf of the compute node 700.

The memory 706 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 706 may be integrated into the processor 704. The memory 706 may store various software and data used during operation such as one or more applications, data operated on by the application(s), libraries, and drivers.

The compute circuitry 702 is communicatively coupled to other components of the compute node 700 via the I/O subsystem 708, which may be embodied as circuitry and/or components to facilitate input/output operations with the compute circuitry 702 (e.g., with the processor 704 and/or the main memory 706) and other components of the compute circuitry 702. For example, the I/O subsystem 708 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 708 may form a portion of a system-on-a-chip (SoC) and be incorporated, along with one or more of the processor 704, the memory 706, and other components of the compute circuitry 702, into the compute circuitry 702.

The one or more illustrative data storage devices 710 may be embodied as any type of devices configured for short-term or long-term storage of data such as, for example, memory devices and circuits, memory cards, hard disk drives, solid-state drives, or other data storage devices. Individual data storage devices 710 may include a system partition that stores data and firmware code for the data storage device 710. Individual data storage devices 710 may also include one or more operating system partitions that store data files and executables for operating systems depending on, for example, the type of compute node 700.

The communication circuitry 712 may be embodied as any communication circuit, device, or collection thereof, capable of enabling communications over a network between the compute circuitry 702 and another compute device (e.g., an edge gateway of an implementing edge computing system). The communication circuitry 712 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 712 includes a network interface controller (NIC) 720, which may also be referred to as a host fabric interface (HFI). The NIC 720 may be embodied as one or more add-in-boards, daughter cards, network interface cards, controller chips, chipsets, or other devices that may be used by the compute node 700 to connect with another compute device (e.g., an edge gateway node). In some examples, the NIC 720 may be embodied as part of a system-on-a-chip (SoC) that includes one or more processors, or included on a multichip package that also contains one or more processors. In some examples, the NIC 720 may include a local processor (not shown) and/or a local memory (not shown) that are both local to the NIC 720. In such examples, the local processor of the NIC 720 may be capable of performing one or more of the functions of the compute circuitry 702 described herein. Additionally, or alternatively, in such examples, the local memory of the NIC 720 may be integrated into one or more components of the client compute node at the board level, socket level, chip level, and/or other levels.

Additionally, in some examples, a respective compute node 700 may include one or more peripheral devices 714. Such peripheral devices 714 may include any type of peripheral device found in a compute device or server such as audio input devices, a display, other input/output devices, interface devices, and/or other peripheral devices, depending on the particular type of the compute node 700. In further examples, the compute node 700 may be embodied by a respective edge compute node (whether a client, gateway, or aggregation node) in an edge computing system or like forms of appliances, computers, subsystems, circuitry, or other components.

In a more detailed example, FIG. 7B illustrates a block diagram of an example of components that may be present in an edge computing node 750 for implementing the techniques (e.g., operations, processes, methods, and methodologies) described herein. This edge computing node 750 provides a closer view of the respective components of node 700 when implemented as or as part of a computing device (e.g., as a mobile device, a base station, server, gateway, etc.). The edge computing node 750 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 750, or as components otherwise incorporated within a chassis of a larger system.

The edge computing device 750 may include processing circuitry in the form of a processor 752, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 752 may be a part of a system on a chip (SoC) in which the processor 752 and other components are formed into a single integrated circuit, or a single package, such as the Edison^{™} or Galileo^{™} SoC boards from Intel Corporation, Santa Clara, California. As an example, the processor 752 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 752 and accompanying circuitry may be provided in a single socket form factor, multiple socket form factor, or a variety of other formats, including in limited hardware configurations or configurations that include fewer than all elements shown in FIG. 7B.

The processor 752 may communicate with a system memory 754 over an interconnect 756 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 758 may also couple to the processor 752 via the interconnect 756. In an example, the storage 758 may be implemented via a solid-state disk drive (SSDD). Other devices that may be used for the storage 758 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 758 may be on-die memory or registers associated with the processor 752. However, in some examples, the storage 758 may be implemented using a micro hard disk drive (HDD). Further, any number of new technologies may be used for the storage 758 in addition to, or instead of, the technologies described, such resistance change memories, phase change memories, holographic memories, or chemical memories, among others.

The components may communicate over the interconnect 756. The interconnect 756 may include any number of technologies, including industry standard architecture (ISA), extended ISA (EISA), peripheral component interconnect (PCI), peripheral component interconnect extended (PCIx), PCI express (PCIe), or any number of other technologies. The interconnect 756 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 756 may couple the processor 752 to a transceiver 766, for communications with the connected edge devices 762. The transceiver 766 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 762. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 766 (or multiple transceivers) may communicate using multiple standards or radios for communications at a different range. For example, the edge computing node 750 may communicate with close devices, e.g., within about 10 meters, using a local transceiver based on Bluetooth Low Energy (BLE), or another low power radio, to save power. More distant connected edge devices 762, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 766 (e.g., a radio transceiver) may be included to communicate with devices or services in the edge cloud 795 via local or wide area network protocols. The wireless network transceiver 766 may be a low-power wide-area (LPWA) transceiver that follows the IEEE 802.15.4, or IEEE 802.15.4g standards, among others. The edge computing node 750 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 766, as described herein. For example, the transceiver 766 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 766 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 768 may be included to provide a wired communication to nodes of the edge cloud 795 or to other devices, such as the connected edge devices 762 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 768 may be included to enable connecting to a second network, for example, a first NIC 768 providing communications to the cloud over Ethernet, and a second NIC 768 providing communications to other devices over another type of network.

Given the variety of types of applicable communications from the device to another component or network, applicable communications circuitry used by the device may include or be embodied by any one or more of components 764, 766, 768, or 770. Accordingly, in various examples, applicable means for communicating (e.g., receiving, transmitting, etc.) may be embodied by such communications circuitry.

The edge computing node 750 may include or be coupled to acceleration circuitry 764, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 756 may couple the processor 752 to a sensor hub or external interface 770 that is used to connect additional devices or subsystems. The devices may include sensors 772, such as accelerometers, level sensors, flow sensors, optical light sensors, camera sensors, temperature sensors, global navigation system (e.g., GPS) sensors, pressure sensors, barometric pressure sensors, and the like. The hub or interface 770 further may be used to connect the edge computing node 750 to actuators 774, such as power switches, valve actuators, an audible sound generator, a visual warning device, and the like.

In some optional examples, various input/output (I/O) devices may be present within or connected to, the edge computing node 750. For example, a display or other output device 784 may be included to show information, such as sensor readings or actuator position. An input device 786, such as a touch screen or keypad may be included to accept input. An output device 784 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 750. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 776 may power the edge computing node 750, although, in examples in which the edge computing node 750 is mounted in a fixed location, it may have a power supply coupled to an electrical grid, or the battery may be used as a backup or for temporary capabilities. The battery 776 may be a lithium ion battery, or a metal-air battery, such as a zinc-air battery, an aluminum-air battery, a lithium-air battery, and the like.

A battery monitor/charger 778 may be included in the edge computing node 750 to track the state of charge (SoCh) of the battery 776, if included. The battery monitor/charger 778 may be used to monitor other parameters of the battery 776 to provide failure predictions, such as the state of health (SoH) and the state of function (SoF) of the battery 776. The battery monitor/charger 778 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 778 may communicate the information on the battery 776 to the processor 752 over the interconnect 756. The battery monitor/charger 778 may also include an analog-to-digital (ADC) converter that enables the processor 752 to directly monitor the voltage of the battery 776 or the current flow from the battery 776. The battery parameters may be used to determine actions that the edge computing node 750 may perform, such as transmission frequency, mesh network operation, sensing frequency, and the like.

A power block 780, or other power supply coupled to a grid, may be coupled with the battery monitor/charger 778 to charge the battery 776. In some examples, the power block 780 may be replaced with a wireless power receiver to obtain the power wirelessly, for example, through a loop antenna in the edge computing node 750. A wireless battery charging circuit, such as an LTC4020 chip from Linear Technologies of Milpitas, California, among others, may be included in the battery monitor/charger 778. The specific charging circuits may be selected based on the size of the battery 776, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 758 may include instructions 782 in the form of software, firmware, or hardware commands to implement the techniques described herein. Although such instructions 782 are shown as code blocks included in the memory 754 and the storage 758, it may be understood that any of the code blocks may be replaced with hardwired circuits, for example, built into an application specific integrated circuit (ASIC).

In an example, the instructions 782 provided via the memory 754, the storage 758, or the processor 752 may be embodied as a non-transitory, machine-readable medium 760 including code to direct the processor 752 to perform electronic operations in the edge computing node 750. The processor 752 may access the non-transitory, machine-readable medium 760 over the interconnect 756. For instance, the non-transitory, machine-readable medium 760 may be embodied by devices described for the storage 758 or may include specific storage units such as optical disks, flash drives, or any number of other hardware devices. The non-transitory, machine-readable medium 760 may include instructions to direct the processor 752 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 782 on the processor 752 (separately, or in combination with the instructions 782 of the machine readable medium 760) may configure execution or operation of a trusted execution environment (TEE) 790. In an example, the TEE 790 operates as a protected area accessible to the processor 752 for secure execution of instructions and secure access to data. Various implementations of the TEE 790, and an accompanying secure area in the processor 752 or the memory 754 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 750 through the TEE 790 and the processor 752.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

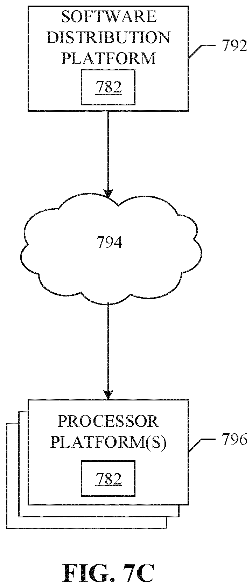

Figure 7C illustrates an example software distribution platform 792 to distribute software, such as the example computer readable instructions 782 of FIG. 7B, to one or more devices, such as example processor platform(s) 796 or example connected edge devices. The example software distribution platform 792 may be implemented by any computer server, data facility, cloud service, etc., capable of storing and transmitting software to other computing devices (e.g., third parties, the example connected edge devices disclosed herein). Example connected edge devices may be customers, clients, managing devices (e.g., servers), third parties (e.g., customers of an entity owning and/or operating the software distribution platform 796). Example connected edge devices may operate in commercial and/or home automation environments. In some examples, a third party is a developer, a seller, and/or a licensor of software such as the example computer readable instructions 782 of FIG. 7B. The third parties may be consumers, users, retailers, OEMs, etc. that purchase and/or license the software for use and/or re-sale and/or sub-licensing. In some examples, distributed software causes display of one or more user interfaces (UIs) and/or graphical user interfaces (GUIs) to identify the one or more devices (e.g., connected edge devices) geographically and/or logically separated from each other (e.g., physically separated IoT devices chartered with the responsibility of water distribution control (e.g., pumps), electricity distribution control (e.g., relays), etc.).

In the illustrated example of FIG. 7C, the software distribution platform 792 includes one or more servers and one or more storage devices. The storage devices store the computer readable instructions 782, which may correspond to example computer readable instructions, as described above. The one or more servers of the example software distribution platform 792 are in communication with a network 794, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 782 from the software distribution platform 792. For example, the software, which may correspond to the example computer readable instructions, may be downloaded to the example processor platform(s) 796 (e.g., example connected edge devices), which is/are to execute the computer readable instructions 782 to implement the techniques described herein. In some examples, one or more servers of the software distribution platform 792 are communicatively connected to one or more security domains and/or security devices through which requests and transmissions of the example computer readable instructions 782 must pass. In some examples, one or more servers of the software distribution platform 792 periodically offer, transmit, and/or force updates to the software (e.g., the example computer readable instructions 782 of FIG. 7B) to ensure improvements, patches, updates, etc. are distributed and applied to the software at the end user devices.

In the illustrated example of FIG. 7C, the computer readable instructions 782 are stored on storage devices of the software distribution platform 792 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 782 stored in the software distribution platform 792 are in a first format when transmitted to the example processor platform(s) 796. In some examples, the first format is an executable binary in which particular types of the processor platform(s) 796 can execute. However, in some examples, the first format is uncompiled code that requires one or more preparation tasks to transform the first format to a second format to enable execution on the example processor platform(s) 796. For instance, the receiving processor platform(s) 796 may need to compile the computer readable instructions 782 in the first format to generate executable code in a second format that is capable of being executed on the processor platform(s) 796. In still other examples, the first format is interpreted code that, upon reaching the processor platform(s) 796, is interpreted by an interpreter to facilitate execution of instructions.

As discussed above, the systems and methods described herein provide for coordinating operations in an edge network based on event occurrence. Event occurrence may be identified using a limited processing device (e.g., an integrated circuit, such as a system on a chip (SoC), a field-programmable gate array (FPGA), or other processing circuitry) for example based on an image from an image capture device (e.g., a camera).

As discussed above, operations in an edge network may be coordinated based on event occurrence. A limited processing device, such as an integrated circuit (e.g., a system on a chip (SoC), a field-programmable gate array (FPGA), or other processing circuitry) may be used to evaluate whether an event has occurred. The event may be detect based on sensor data. To obtain the sensor data, the limited processing device may be part of or connected to a sensor, such as an image capture device (e.g., a camera), a temperature sensor, heat sensor, a power level sensor, an accelerometer, a gyroscope, a motion detector, a proximity detector, etc.

In an example, a sensor may capture sensor data (e.g., an image capture device may capture an image or series of images), which may be evaluated using circuitry of the limited processing device to determine whether an event has occurred. An event may include appearance or disappearance of an object, motion of an object, ambient conditions, etc., as further described below.

In an example, when an event is determined to have occurred, the limited processing device may perform an additional operation, such as sending data to a remote device (e.g., another image capture device, a peer device, an edge device, an orchestrator, a server, a vehicle, a user device, etc.), further processing an image, changing a framerate, frequency, or size of an image to be captured, or the like. The event detection may trigger a change in power level used by the limited processing device, a change in active components (e.g., activating a communication component or a processor), establishing a communication session with a device (e.g., an edge device), or the like.

In an example, when an event is determined to occur, the limited processing device may trigger a NIC communicatively connected to the limited processing device to use an activation function (e.g., a logic or hardware portion of the NIC) to send an activation message to a hardware component. In an example, the hardware component activated by the activation function may be at a device remote from the limited processing device. The activation function and the NIC may be standalone or part of further edge network infrastructure. The hardware component may be activated when receiving the activation message. The hardware component may include another sensor (e.g., a second image capture device), an edge server component, or the like.

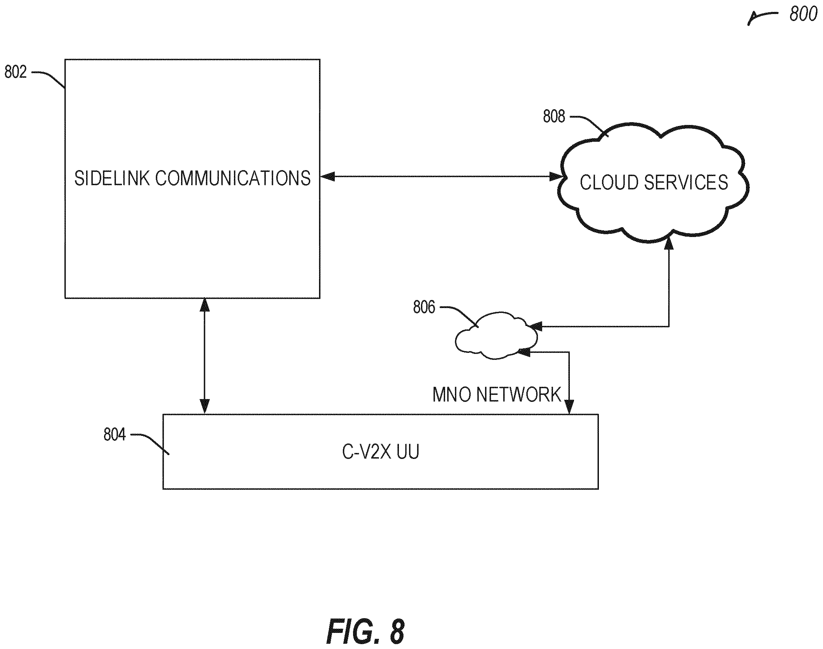

FIG. 8 illustrates example architecture topology 800 for cloud or edge services in accordance with some embodiments. The example architecture topology 800 shows optional components and configurations, which may be changed without deviating from the systems and methods described herein.

The example architecture topology 800 includes devices (e.g., connected cars, connected sensors, connected drones, etc.) communicating via sidelink communications 802 (shown as a single block for convenience), inter-device communications (e.g., C-V2X 804), a mobile network operator (MNO) network 806, and a cloud service 808.

The example architecture topology 800 may be used to facilitate deployments spanning connected cameras, connected cars, connected sensors, connected drones, etc., and use cases where client to client or vehicle to client communications may enhance user experience along vectors such as safety, user experience, etc.

One of the technical challenges with configuring the example architecture topology 800 for real-time infrastructure usage is generating sub-second response times. For example, consider a car speeding dangerously, and the need for an actionable response back to the car, for example including images from street cameras capturing around a corner, communication of speed back to the car or driver, etc. These communications require low latency real-time responses. Edge computing and pushing compute capability to the edge in such networks provides mitigation of these low latency requirements, but still has drawbacks. For example, pushing functionality to edge servers involves communication to the edge server, where there may be contention for resources, performing computation at the edge, and then transmission and routing of information or data back to the client devices. Each of these trips and processing steps may slow down the ultimate communication.

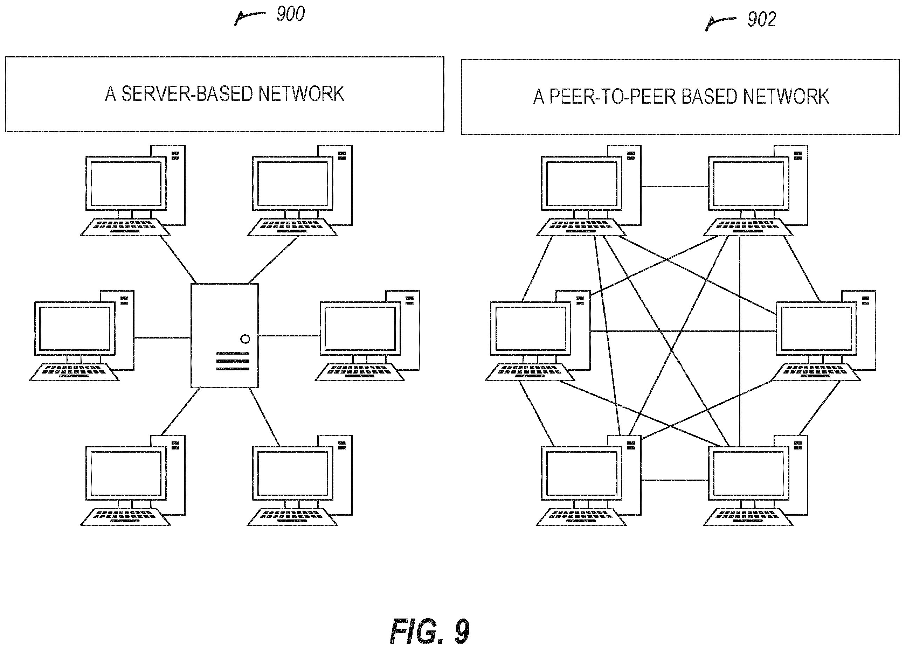

FIG. 9 illustrates network architecture arrangements 900A and 900B in accordance with some embodiments. A server-based network is found in the first arrangement 900, and a peer-to-peer based network is shown in the second arrangement 902. While these arrangements are shown independently, they may be used together, such as by being connected or in a hybrid arrangement, with some server-based network components and some peer-to-peer based network components.

Edge computing includes pushing compute capability to an edge device in an edge network. For example, an edge device may be located near a user device, a vehicle, etc., for quicker or more localized processing. Edge computing may be used to process information according to low latency requirements, but may not be fast enough. For example, pushing functionality to edge servers involves communication to the edge server, such as is illustrated in the arrangement 900, where there may be contention for resources. Further delays may occur with performing computation at an edge device, and transmission and routing of information/data back to a client device.

Further issues with the server-based network include relying on edge server and edge devices for trivial computations because significant communications may add round trip latency. The edge server may be resource constrained and may become a bottleneck, especially in times of high load, as well as being a single point of failure and communication bottleneck, as shown in arrangement 900. Offload mechanisms may be successful only when there is a minimum edge-server to client ratio. In times of high load, with an arbitrary high number of connected clients, the delays may result in a cascade of latency adders, impeding any use of the arrangement 900.

A peer to peer client networks, such as that shown in arrangement 902, do not have single points of failure or centralized bottlenecks, and may be scaled with increased or arbitrary number of devices. The peer-to-peer "compute and communicate" capability of arrangement 902 may be applied to client devices, as well as broader edge network use cases, When client devices are deployed as part of client infrastructures, the arrangement 902 may be used for the client devices. Connected clients, such as cameras, drones, connected cars, etc., may be equipped with the ability to detect existing infrastructures. For example, a car from Canada driving in the city of Chandler, Arizona may be able to register itself to the local peer to peer network to be able to receive data with secure point to point channels defined. In this example, the car may not broadcast or jam the City wireless network (e.g., to avoid malicious users), but may be able to receive inputs or images from the infrastructure same based on trusted certificates. Further details related to peer-to-peer networks, such as in arrangement 902 are described below. In an example, a peer device may be mapped into a cloud-native mesh.

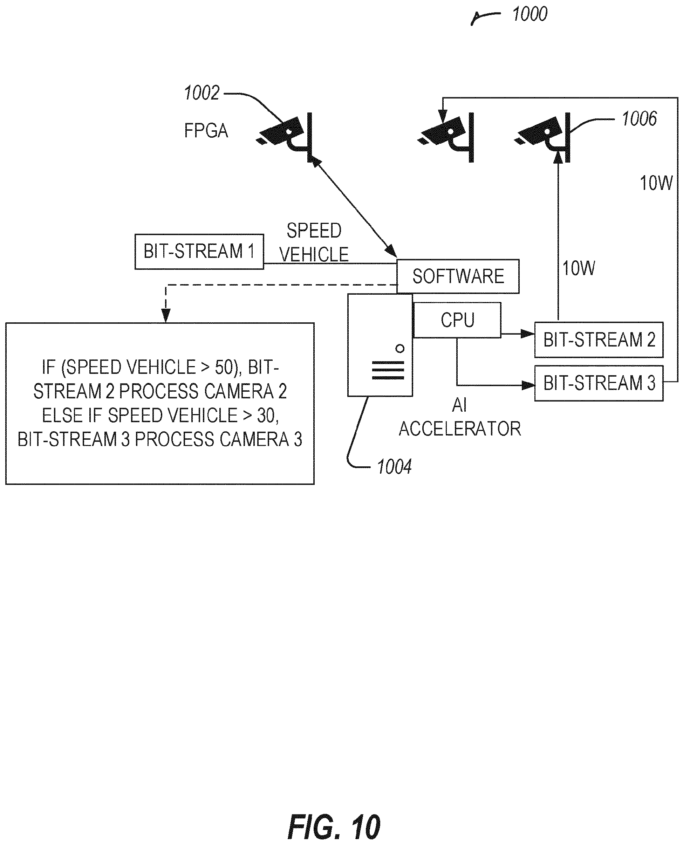

FIGS. 10-11 illustrate diagrams showing data flow based on event detection in accordance with some embodiments. Diagram 1000 of FIG. 10 illustrates an example configuration including a device with limited processing power, such as an FPGA, with an image capture device 1002 (which may be housed as a single device). The FPGA may process an image captured by the image capture device 1002 to determine a speed of a vehicle in the image. The FPGA may include multiple states, such as a first state where a speed of the vehicle (or any other vehicles identified in the image) is below a first speed, a second state where the speed is above the first speed but below a second speed, and a third state where the speed is above the second speed. These thresholds or ranges may be used to control operation of the FPGA. The FPGA may detect a state based on the image. The state may indicate a first bit-stream for further operations to be taken by the FPGA. For example, in the first state, the FPGA may operate at a low power, continue monitoring for event changes, or not communicate or refrain from communicating with an edge device or a vehicle. In the second state, a second bit-stream may indicate a change in device configuration or operation, such as processing an image from a second image capture device. The third state may indicate a third bit-stream is to be activated. The third bit-stream may cause an activation function to be sent to another device, such as an edge server 1004, for further processing (e.g., by a processor, such as a CPU or GPU). In another example, the activation function may be sent to a second image capture device 1006, for example to activate the second image capture device 1006 to capture images, capture images more frequently, capture images at a higher resolution, direct the second image capture device 1006 to aim in a particular direction, or the like.

The activation function may be sent to a software stack in the first image capture device 1002, the second image capture device 1006 or the edge server 1004. The software stack may activate a bit-stream to be used for the particular event that was detected by the first image capture device 1002. In an example, the bit-stream may cause images to be pulled from another camera (e.g., second image capture device 1006) and initiate further processing (e.g. performing pedestrian detection or object detection). In some examples, the bit-stream may cause information to be sent the vehicle using a V2X communication.

In an example, the software stack does not need to be running, and thus may be dormant or at a low or lower power state. The software stack may be woken up by the activation function based on the event detection.

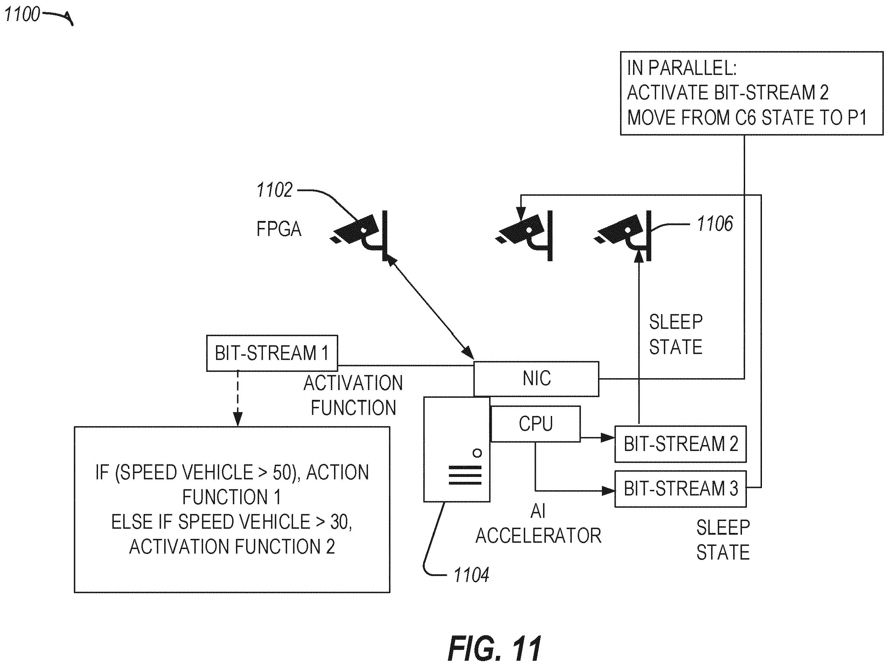

FIG. 11 shows how architecture 1100 may be changed once activation functions are used. The image capture device 1102, which may include a system on a chip (SoC) or FPGA to detect events (e.g., whether a vehicle is detected moving above a threshold speed, such as 60 mph). Once the event is detected, an activation function is sent to the edge appliance by the image capture device 1102.

In an example, a NIC on the edge appliance (e.g., edge server 1104) may include logic that use the received activation function to determine which elements of the system are to be activated. For example, the NIC may activate an AI accelerator that executes bit-stream 2, which may be used to start pulling data from the image capture device 1102 or a second image capture device 1006, for processing. Some accelerators with network interfaces may be used that are independent to the platform. The NIC may activate the CPU of the edge server 1104, in some examples. In an example, the NIC may activate a corresponding application that is responsible to perform an action after the bit-stream 2 is completed.

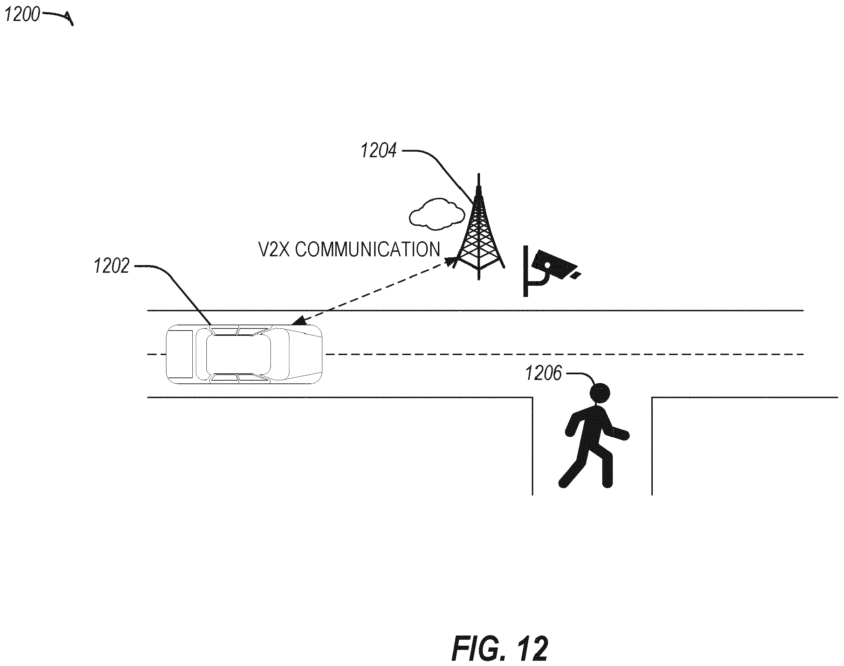

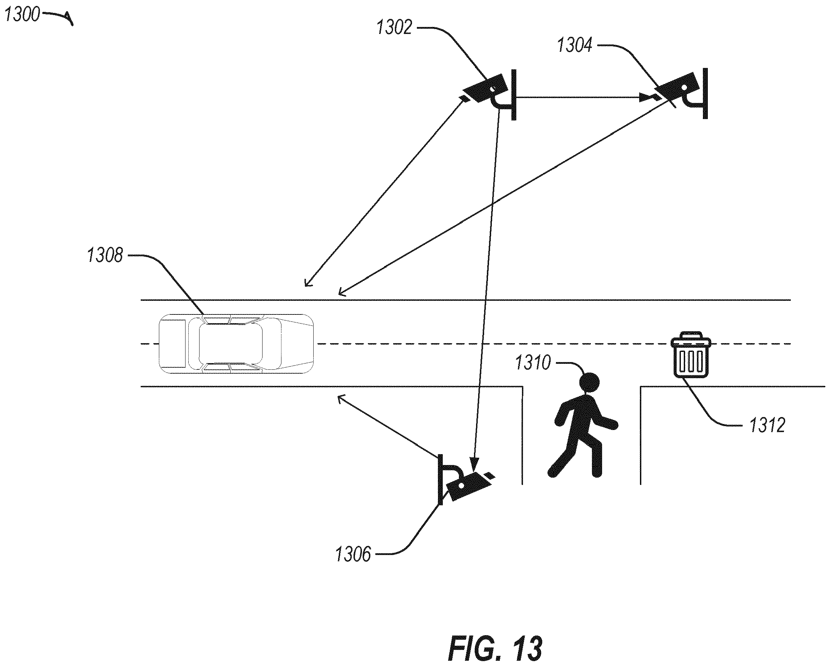

FIGS. 12-13 illustrate example deployments for an event detection system in accordance with some embodiments. FIG. 12 illustrates a scenario 1200 with a vehicle 1202 and a pedestrian 1206, with an edge deployment 1204 (e.g., including an image capture device with an FPGA and an edge server). FIG. 13 illustrates a scenario 1300 with an edge deployment having a first camera 1302, a second camera 1304, and a third camera 1306, which may be used to detect a vehicle 1308, a pedestrian 1310, or an object 1312 (e.g., a static object, such as a garbage can).

The deployments of FIGS. 12-13 may include an activation function (e.g., logic or hardware) on a NIC or SmartNIC. The activation function may be used to send activation messages to other peer clients (e.g., from a NIC of the first camera 1302 to the second camera 1304 to activate the second camera 1304). The activation function may determine which peer devices or other devices to activate based on information received from the client (e.g., the first camera 1302). The activation function may be implemented on the NIC outside of a CPU or Edge appliance (e.g., the NIC may be standalone or a NIC plus infrastructure). In an example, the activation function may be a part of existing Ethernet or Network protocols.

In FIG. 13, for example, the first camera 1302 may detect an event, send information about the event to the activation function on logic the NIC, The NIC may propagate (via the activation function) data based on the event information to the second camera 1304 or the third camera 1306 or even other applications. In this example, the first camera 1302 may not know that the activation function has activated the other cameras. After the NIC (e.g., on the first camera 1302) processes the event, the activation function may send network messages to NICS of the second camera 1304 or the third camera 1306.

In another example, an activation function of a NIC may be used to activate an edge application, such as a cloud-native application in a distributed service mesh, which may be run in containers. The activation function may activate the application in response to the NIC receiving information about an event from a sensor. Activation rules may be configured on the NIC.

The edge deployment examples of FIGS. 12-13 use activate functions based on observed actions (e.g., events), to activate further resources, such as processing. For example, a speed trap at scenario 1200 may detect that the vehicle 1202 is speeding (e.g., has a speed exceeding a threshold), and trigger a local camera to send images or information about the vehicle 1202 to a registered car or a device of the pedestrian 1206, where the registered car or the device are in an intercept path of the speeding vehicle 120. The registered car or device in the intercept path may receive this information and use their local resources (e.g., a camera, a microphone, a radar, etc.) to generate further data. This data may include further information on the behavior of the vehicle 1202 as it approaches the registered car or device. The further data may be used to perform local advanced analytics or predictions of the behavior of the vehicle 1202. The registered car or device may use the analytics or predictions to make a decision of whether an alert is to be issued to a driver of the registered car or the pedestrian 1206. An action may be taken to alert the vehicle 1202 of its speed (e.g., using a V2X communication from the edge deployment 1204) or that there is a pedestrian 1206 in an intercept path, or the like.

A connected peer-to-peer activation function and broadcast list capability may use an interface for an administrator to register rules (e.g., events to be detected) or activation functions. The rules, events, or activation functions may include a defined threshold on existing signals for when activations are to occur, such as a threshold speed of a vehicle, a threshold number of objects detected (e.g., a single pedestrian, debris in a road, etc.), or the like. The rules specified may be subject to ambient conditions. For example, when an ambient temperature is below a threshold (e.g., ten degrees F), or precipitation is greater than a threshold (e.g., 2 inches), a speed threshold may be used.

The rules may be specific to a single street or sub-locality. In an example, the rules may be acted upon by local sensors in P2P cases, for example, a region may have a street experiencing flooding, where the action rules may be different from a few streets over where there is no flooding. In contrast, using centralized edge servers would require significant metadata transfer (e.g., of sensor information) for this kind of focused, specialized decision making resulting in additional latencies and delays. The edge deployment 1204 may use a decentralized approach to decrease the time to take meaningful end-to-end action. The edge deployment 1204 may register adaptive and automatic functions based on a set of local peer-to-peer sensor inputs using a camera. In an example, a sensor may include a temperature sensor, heat sensor, power sensor (e.g., battery level indicator or voltage output), accelerometer, gyroscope, pressure sensor, proximity sensor, image capture device, gas detector, motion detector, or the like.

The scenario 1300 includes an example where the vehicle 1308 is moving, a pedestrian 1310 may be in an intercept path or may move into the intercept path, and an object 1312 may be in the intercept path of the vehicle 1308.

In an example, a client (e.g., image capture devices 1302, 1304, or 1306) may have logic that relates events to activation functions. The client may detect events using analytics performed by the client. The events may include determining that the speed of the vehicle 1308 is above a certain threshold. The activation functions may correspond to respective specific client peers or an edge server.

In an illustrative example, the first image capture device 1302 identifies that the vehicle 1308 is going at speed X. The first image capture device 1302 has a rule defined to trigger when a car speed is between A < X < B, and a corresponding activation function to send to the second image capture device 1304 or the third image capture device 1306 to start road segmentation.

The first image capture device 1302 sends the activation function (e.g., using a secure channel) to the second image capture device 1304 or the third image capture device 1306. The second image capture device 1304 or the third image capture device 1306 may automatically start performing road segmentation or identifying an object, such as object 13012 or pedestrian 1310, who may be in an image capture range of one of the second image capture device 1304 or the third image capture device 1306. The second image capture device 1304 or the third image capture device 1306 may have further rules defined to for events where identification is made of an object or pedestrian. These events may trigger corresponding activation functions to be generated. In an example, the activation functions may include a V2X communication to propagate the identified element (e.g., the object 1312 or the pedestrian 1310) to the vehicle 1308 (which may have moved, and now be in a new position). The vehicle 1308 may make a further determination of whether to take an action, such as applying brakes, swerving, alerting a driver, etc. The activation function may be sent to a device of the pedestrian 1310, in an example, such as to alert the pedestrian 1310 to move.

In the scenario 1300, activation functions are shown for a specific type of problem, however other events and activation functions may be used. For example, other actions may be triggered, such as generating information down to next levels of the edge (e.g., an edge server), alerting authorities (e.g., when the speed of the vehicle 1308 is dangerous or to remove the object 1312 from the road), paying a toll, activating a proximity trigger (e.g., when the vehicle 1308 approaches the driver's house, turn on the lights), or the like.

In an example, an edge deployment (e.g., configuration of image capture devices, edge servers, sensors, or the like) may be used to identify an event pattern. The event pattern may include a traffic pattern, an object pattern, a pedestrian pattern, a weather pattern, a combination of one or more of these patterns, or the like. For example, a particular intersection shown in scenario 1300 may observe behavior of vehicles or pedestrians to learn a pattern of action. The pattern may be used to further optimize operation of the edge deployment. For example, heavily trafficked times of day be vehicles and pedestrians may be identified, and all three image capture devices 1302, 1304, and 1306 may be activated to generate images at a particular frequency or resolution at the heavily trafficked times of day.

Other example pattern detection and optimization may be used. For example, the third image capture device 1306 may observe a child with a ball on the side of the road. This is considered a highly unpredictable risk for vehicles to respond to. The third image capture device 1306 may remember this event for a certain number of days. When the event is repeated, such as based on metadata of the event, then the third image capture device 1306 may flag the repeated event as a pattern. The metadata of the pattern may be shared with the first image capture device 1302 or the second image capture device 1304 (or an edge server).

The pattern may include details of an event, such as a place, date (e.g., Mon-Fri), time (e.g., 15:00 - 20:00), object (e.g., child), a confidence level (e.g., high), or an accident risk (e.g., high]. A vehicle may be subscribed to a "high risk" channel to receive an alert about the event when the vehicle is at the place within the timeframe. When a vehicle observes the same event (e.g., child with ball) the vehicle may reinforce the pattern event by notifying the third image capture device 1306, which may update the stored pattern data. When the incident is not a pattern, the third image capture device 1306 may start ageing the event over time, until it expires as a pattern, and the third image capture device 1306 may proceed as if the event was not encountered as a pattern.

In an example, road roughness may be considered (e.g., as an ambient condition). Client devices may receive information from vehicles (e.g., road data coming from vehicle sensors such as accelerometer and gyroscope) and road roughness analysis may be performed with the latest information. The road roughness analysis may be used to prevent car accidents after the road is damaged (e.g. due to flood), or before the road gets damaged (as a warning to cars, due to a prediction).

Similarly, image capture devices or vehicles may watch for certain reckless behavior of other vehicles, such as speeding cars close to certain venues. These patterns may be captured and predicted. For example, when a street experiences reckless driving late night Friday and Saturday, the client devices may detect that a pattern has occurred and determine that the pattern is likely to continue. The predicted behavior may be communicated to pedestrian in the area to watch for speeding or reckless vehicles.

Additional patterns may be detected and reported, such as scenic drives during a certain part of the year. For example, certain streets may have particularly a show of spring colors with flower blooms or foliage during fall. These patterns may be detected and shared with visitors, based on a specified time of year.

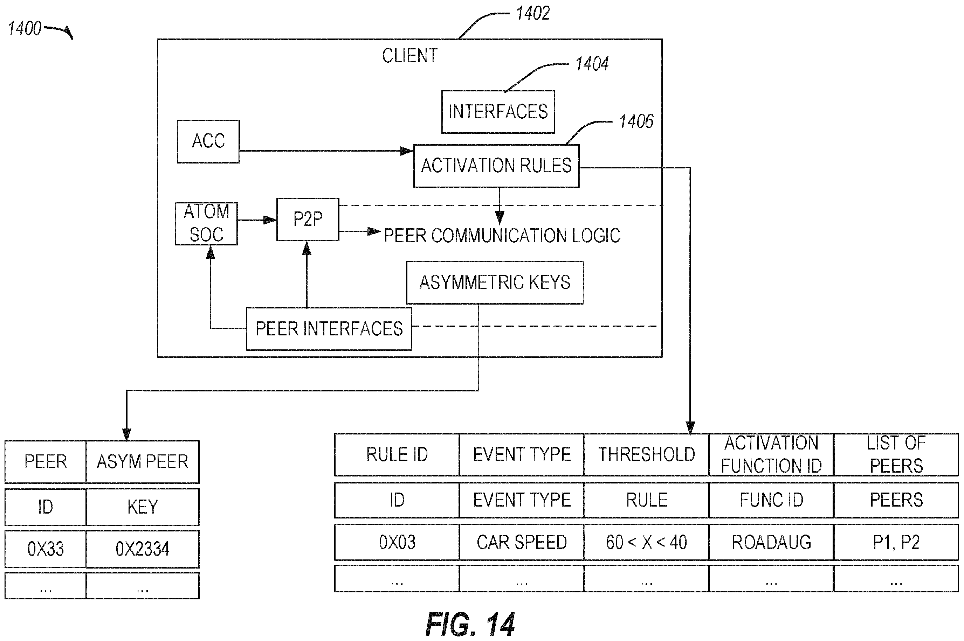

FIG. 14 illustrates an architecture 1400 for implementing event detection techniques in accordance with some embodiments. The architecture 1400 illustrates a client 1402, such as a camera with an FPGA. The client 1402 may include an interface 1404, and accessible activation rules 1406 (e.g., for detecting events), which may be stored in memory of the client 1402.

The client 1402 may include logic that is responsible for generating and managing the activation function generation according to the activation rules 1406, for example. It includes the following elements: The interfaces 1404 may be used to configure different elements of event detection, activation function use, or image processing..

For example, one interface of the interfaces 1404 may be used to register a particular activation function rule. This interface may be accessed by the infrastructure owner (exclusively, in an example). This interface may be performed with required credentials. This interface may be used to identify a rule (e.g., as provided by the owner) and update or remove a function as needed.

An interface may identify an event type. The event type may be provided by a specific algorithm executed in the client 1402 (e.g., via an activation function). The algorithm may be executed in a FPGA or Atom type of compute element, in some examples. In other examples, the algorithm may be executed by any other compute element. An event, for example, may be called a CAR_SPEED_DETECTED, which may be generated by the algorithm and sent out to the activation rule (e.g., to detect a speed of a car).

A threshold or the rule definition associated to the activation function may be applied at an interface. The threshold or rule definition may be a Boolean rule that uses an input of data provided by the algorithm. In an example only one field is provided. In other examples, multiple fields may be used.

The interface may be used to create or modify an activation function identifier associated with the rule. The interface may be used to create or modify a set of peers to whom the activation function is to be propagated when the rule is asserted. Peers may be other assets such as vehicles using cellular V2X, other image capture devices, or an edge device (e.g., a server, further edge connected devices, or the like). The interface may be used to include a mechanism to limit propagation across different levels of the set of peers (e.g., if something happens in a specific point, propagation is limited to a particular distance from the specific point).

In an example, the interfaces 1404 may include an interface to register a set of public keys for the list of peers to whom the logic may propagate activation functions. This interface may be accessible only to the infrastructure owner. This interface may be used to define an identifier of a peer (e.g., each peer in the list of peers), an asymmetric key to be used to secure the data, or the like. The interface may be used as a registration authority (RA) or a certificate authority (CA) to register the public keys. The public keys may be keys for Public Key Cryptography encrypted. Private keys may be kept as a secret by the peers, and the public keys may be used to decrypt data sent to or from the peer devices. Once registered, the interface may use a digital certificate, which has the public key to decrypt the patient data. The certificate may have an expiration date or time. The interface may be used to revoke access to peer data or communication, such as by using a revoke mechanism from the public key cryptography infrastructure. The public keys may be used for security or cryptographic approaches as used herein.

In an example, the interfaces 1404 may include an interface accessible by a peer client that may be used to send the activation functions to the particular client. This interface may be used to define an activation function identifier (e.g., an ID), an optional set of parameters or data associated with the activation function, or the like. The set of parameters may include detecting a car at speed X at location Y.

The client 1402 includes activation logic that may be used to process events coming from the algorithm running on the compute element and generate proper activation functions. The logic may use peer communication logic to generate the messages in an example.

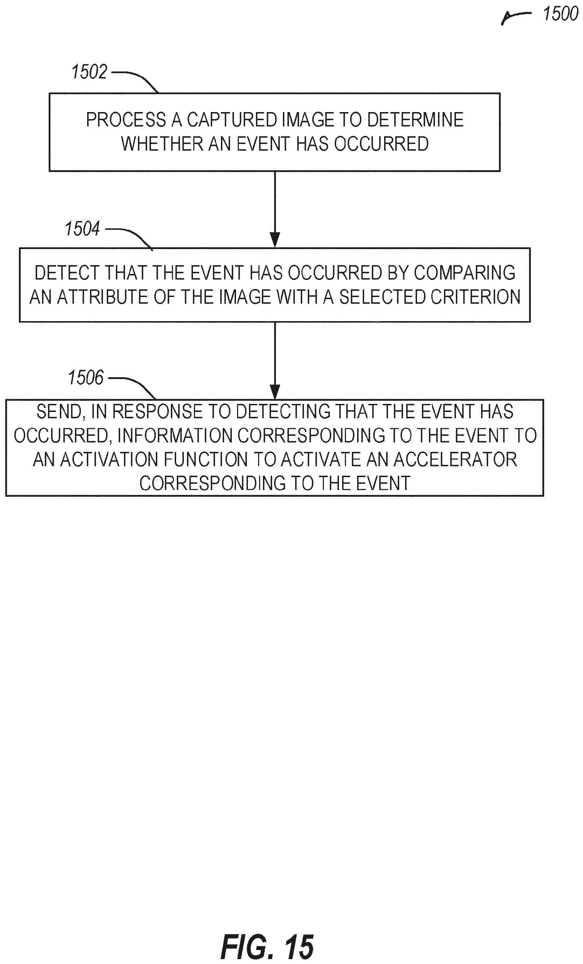

FIG. 15 illustrates a flowchart showing a technique 1500 for coordinating operations based on event occurrence in accordance with some embodiments. The technique 1500 may be performed by a networked device, such as an image capture device (e.g., a camera) including processing circuitry, such as an integrated circuit. In an example the integrated circuit may include a field-programmable gate array (FPGA).

The technique 1500 includes an operation 1502 to process a captured image to determine whether an event has occurred. The captured image may be generated by a capture device (e.g., a camera) of the networked device. The captured image may be processed in response to the processing circuitry executing operations to establish a pattern based on historical images, and determine that conditions captured in an immediately previous image indicate the pattern. The pattern may be identified using machine learning, in some examples. In some examples, operation 1502 may process sensor data of any kind, replacing or augmenting the image capture processing, such as sensor data of a temperature sensor, battery, ambient light sensor, heat sensor, accelerometer, gyroscope, etc.

The technique 1500 includes an operation 1504 to detect that the event has occurred by comparing an attribute of the image with a selected criterion. In an example, the selected criterion is selected by the processing circuitry based on ambient conditions at the device. For example, the ambient conditions may correspond to weather, time of day, or the like. The weather or time of day may cause difficulties stopping a vehicle, in some examples. Thus, the selected criterion may include a decrease in stopping distance when ambient conditions cause difficulties in stopping. In an example, the selected criterion may include existence of an object (e.g., a vehicle, a pedestrian, a specified object such as a ball, or the like) or a threshold (e.g., a speed of a vehicle, an amount of rain, etc.).

The technique 1500 includes an operation 1506 to send, in response to detecting that the event has occurred, information corresponding to the event to an activation function to activate an accelerator corresponding to the event. The activation function may be part of a network interface component (NIC), for example in an edge appliance (e.g., of an edge device, such as a compute device having a processor and memory). The activation function may activate a bit-stream corresponding to the event, such as sending a network message to a remote device for activating the accelerator may correspond to the bit-stream. The network message may be sent to a second device to activate the second device (e.g., to activate a camera of the second device) to capture a second image. The network message may be sent to an edge device, such as a compute device including memory and a processor, to implement image processing operations on the image.

In a specific example, the image capture device is a camera, and detecting the event includes detection of a car and a pedestrian within the image. In this specific example, the activation function causes a second camera to increase a number of image captures in a time frame.

In an example, the technique 1500 may include registering a particular activation function rule including a rule identifier, an event type, a threshold associated with the activation function, an activation function identifier that is associated with the rule, and a set of peers to propagate the network message. In an example, the technique 1500 may include registering a set of public keys for a set of peer devices (e.g., for communicating with when the event is detected to have occurred).

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together (e.g., including over a wire, over a network, using one or more platforms, wirelessly, via a software component, or the like), comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

Additional examples of the presently described method, system, and device embodiments include the following, non-limiting implementations. Each of the following non-limiting examples may stand on its own or may be combined in any permutation or combination with any one or more of the other examples provided below or throughout the present disclosure.

Each of these non-limiting examples may stand on its own, or may be combined in various permutations or combinations with one or more of the other examples.

Example 1 is a device to coordinate operations based on event occurrence, the device comprising: an image capture component to capture an image; and processing circuitry to execute operations to: process the image captured by the image capture component to determine whether an event has occurred; detect that the event has occurred by comparing an attribute of the image with a selected criterion; send, in response to detecting the event, information corresponding to the event to an activation function of a network interface component (NIC) in an edge appliance to activate a bit-stream corresponding to the event, the activation function, when executed, to send a network message to activate an accelerator corresponding to the bit-stream.

In Example 2, the subject matter of Example 1 includes, wherein the processing circuitry is an integrated circuit.

In Example 3, the subject matter of Example 2 includes, wherein the integrated circuit is a field-programmable gate array (FPGA).

In Example 4, the subject matter of Examples 1-3 includes, wherein the selected criterion is selected by the processing circuitry based on ambient conditions at the device.

In Example 5, the subject matter of Examples 1-4 includes, wherein the activation function sends the network message to a second device to activate the second device to capture a second image.

In Example 6, the subject matter of Examples 1-5 includes, wherein the activation function sends the network message to an edge device including memory and a processor to implement image processing operations on the image.

In Example 7, the subject matter of Examples 1-6 includes, wherein the captured image is processed in response to the processing circuitry executing operations to establish a pattern based on historical images, and determine that conditions captured in an immediately previous image indicate the pattern.

In Example 8, the subject matter of Examples 1-7 includes, wherein the processing circuitry is further to execute operations to register a particular activation function rule including a rule identifier, an event type, a threshold associated with the activation function, an activation function identifier that is associated with the rule, and a set of peers to propagate the network message.

In Example 9, the subject matter of Examples 1-8 includes, wherein the processing circuitry is further to execute operations to register a set of public keys for a set of peer devices.

In Example 10, the subject matter of Examples 1-9 includes, wherein the selected criterion includes existence of an object or a threshold.

In Example 11, the subject matter of Examples 1-10 includes, wherein the image capture device is a camera, detecting the event includes detection of a car and a pedestrian within the image, and wherein the activation function causes a second camera to increase a number of image captures in a time frame.

Example 12 is an apparatus for coordinating operations based on event occurrence, the apparatus comprising: means for capturing an image; means for processing the image captured by the camera to determine whether an event has occurred; means for detecting that the event has occurred by comparing an attribute of the image with a selected criterion; and means for sending, in response to detecting the event, information corresponding to the event to an activation function of a network interface component (NIC) in an edge appliance to activate a bit-stream corresponding to the event, the activation function, when executed, to activate an accelerator corresponding to the bit-stream.

In Example 13, the subject matter of Example 12 includes, wherein the selected criterion includes existence of an object or a threshold.

In Example 14, the subject matter of Examples 12-13 includes, means for registering a particular activation function rule including a rule identifier, an event type, a threshold associated with the activation function, an activation function identifier that is associated with the rule, and a set of peers to propagate the activation function.

In Example 15, the subject matter of Examples 12-14 includes, means for selecting the selected criterion based on ambient conditions at the image capture device.

Example 16 is a method for coordinating operations based on event occurrence, the method comprising: capturing sensor data using a sensor component, processing, using processing circuitry of the image capture device, the sensor data to determine whether an event has occurred, detecting that the event has occurred by comparing an attribute of the sensor data with a selected criterion, and sending, in response to detecting the event, information corresponding to the event to an activation function of a network interface component (NIC) in an edge appliance to activate a bit-stream corresponding to the event, the activation function, when executed, to send a network message to activate an accelerator corresponding to the bit-stream.

In Example 17, the subject matter of Example 16 includes, selecting the selected criterion based on ambient conditions at the sensor component.

In Example 18, the subject matter of Examples 16-17 includes, wherein sending the network message includes sending the network message to a second sensor component to activate the second sensor component to capture further sensor data.

In Example 19, the subject matter of Examples 16-18 includes, processing the captured sensor data in response to identifying that a previously established pattern has occurred using prior sensor data from the sensor.

In Example 20, the subject matter of Examples 16-19 includes, registering a particular activation function rule including a rule identifier, an event type, a threshold associated with the activation function, an activation function identifier that is associated with the rule, and a set of peers to propagate the network message.

Example 21 is a device to coordinate operations based on event occurrence, the device comprising: an image capture component; a network interface component (NIC) to receive a network message from an activation function corresponding to an event identified at a remote image capture device; and processing circuitry to execute operations to: activate, based on the network message, a bit-stream corresponding to the event to activate an accelerator at the device corresponding to the bit-stream; process an image captured by the image capture component using the accelerator; detect that a second event has occurred by comparing an attribute of the captured image with a selected criterion; and send a V2X communication message to a vehicle identified in the captured image.

In Example 22, the subject matter of Example 21 includes, wherein the V2X communication message identifies a dangerous operating condition for the vehicle.

In Example 23, the subject matter of Examples 21-22 includes, wherein the processing circuitry is further to execute operations to execute a second activation function of the device to activate an accelerator to generate the V2X communication message.

In Example 24, the subject matter of Examples 21-23 includes, wherein the processing circuitry is further to execute operations to send the V2X communication message to a third image capture device based on detecting the second event.

In Example 25, the subject matter of Examples 21-24 includes, wherein the processing circuitry is a field-programmable gate array (FPGA).

Example 26 is a method to coordinate operations based on event occurrence, the method comprising: capturing sensor data using a sensor, determining, using processing circuitry, that an event has occurred using the captured sensor data, sending information corresponding to the event to a NIC, determining, at an activation function of the NIC, a resource (e.g., a peer device, sensor component, or application) to activate based on the information corresponding to the event, and sending a network message to activate the resource.

In Example 27, the resource is a remote sensor or an edge server.

Example 28 is at least one machine-readable medium including instructions that, when executed by processing circuitry, cause the processing circuitry to perform operations to implement of any of Examples 1-27.

Example 29 is an apparatus comprising means to implement of any of Examples 1-27.

Example 30 is a system to implement of any of Examples 1-27.

Example 31 is a method to implement of any of Examples 1-27.

Another example implementation is an edge computing system, including respective edge processing devices and nodes to invoke or perform the operations of Examples 1-27, or other subject matter described herein.

Another example implementation is a client endpoint node, operable to invoke or perform the operations of Examples 1-27, or other subject matter described herein.

Another example implementation is an aggregation node, network hub node, gateway node, or core data processing node, within or coupled to an edge computing system, operable to invoke or perform the operations of Examples 1-27, or other subject matter described herein.

Another example implementation is an access point, base station, road-side unit, street-side unit, or on-premise unit, within or coupled to an edge computing system, operable to invoke or perform the operations of Examples 1-27, or other subject matter described herein.

Another example implementation is an edge provisioning node, service orchestration node, application orchestration node, or multi-tenant management node, within or coupled to an edge computing system, operable to invoke or perform the operations of Examples 1-27, or other subject matter described herein.

Another example implementation is an edge node operating an edge provisioning service, application or service orchestration service, virtual machine deployment, container deployment, function deployment, and compute management, within or coupled to an edge computing system, operable to invoke or perform the operations of Examples 1-27, or other subject matter described herein.

Another example implementation is an edge computing system including aspects of network functions, acceleration functions, acceleration hardware, storage hardware, or computation hardware resources, operable to invoke or perform the use cases discussed herein, with use of Examples 1-27, or other subject matter described herein.

Another example implementation is an edge computing system adapted for supporting client mobility, vehicle-to-vehicle (V2V), vehicle-to-everything (V2X), or vehicle-to-infrastructure (V2I) scenarios, and optionally operating according to ETSI MEC specifications, operable to invoke or perform the use cases discussed herein, with use of Examples 1-27, or other subject matter described herein.

Another example implementation is an edge computing system adapted for mobile wireless communications, including configurations according to an 3GPP 4G/LTE or 5G network capabilities, operable to invoke or perform the use cases discussed herein, with use of Examples 1-27, or other subject matter described herein.

Another example implementation is an edge computing node, operable in a layer of an edge computing network or edge computing system as an aggregation node, network hub node, gateway node, or core data processing node, operable in a close edge, local edge, enterprise edge, on-premise edge, near edge, middle, edge, or far edge network layer, or operable in a set of nodes having common latency, timing, or distance characteristics, operable to invoke or perform the use cases discussed herein, with use of Examples 1-27, or other subject matter described herein.

Another example implementation is networking hardware, acceleration hardware, storage hardware, or computation hardware, with capabilities implemented thereupon, operable in an edge computing system to invoke or perform the use cases discussed herein, with use of Examples 1-27, or other subject matter described herein.

Another example implementation is an edge computing system configured to perform use cases provided from one or more of: compute offload, data caching, video processing, network function virtualization, radio access network management, augmented reality, virtual reality, industrial automation, retail services, manufacturing operations, smart buildings, energy management, autonomous driving, vehicle assistance, vehicle communications, internet of things operations, object detection, speech recognition, healthcare applications, gaming applications, or accelerated content processing, with use of Examples 1-27, or other subject matter described herein.

Another example implementation is an apparatus of an edge computing system comprising: one or more processors and one or more computer-readable media comprising instructions that, when executed by the one or more processors, cause the one or more processors to invoke or perform the use cases discussed herein, with use of Examples 1-27 or other subject matter described herein.

Another example implementation is one or more computer-readable storage media comprising instructions to cause an electronic device of an edge computing system, upon execution of the instructions by one or more processors of the electronic device, to invoke or perform the use cases discussed herein, with use of Examples 1-27, or other subject matter described herein.

Another example implementation is an apparatus of an edge computing system comprising means, logic, modules, or circuitry to invoke or perform the use cases discussed herein, with use of Examples 1-27, or other subject matter described herein.

Although these implementations have been described with reference to specific exemplary aspects, it will be evident that various modifications and changes may be made to these aspects without departing from the broader scope of the present disclosure. Many of the arrangements and processes described herein can be used in combination or in parallel implementations to provide greater bandwidth/throughput and to support edge services selections that can be made available to the edge systems being serviced. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. Other aspects may be utilized and derived therefrom, such that structural and logical substitutions and changes may be made without departing from the scope of this disclosure. This Detailed Description, therefore, is not to be taken in a limiting sense, and the scope of various aspects is defined only by the appended claims, along with the full range of equivalents to which such claims are entitled.

Such aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

1. A method for coordinating operations based on event occurrence, the method comprising:
capturing sensor data using a sensor component;
processing, using processing circuitry of the image capture device, the sensor data to determine whether an event has occurred;
detecting that the event has occurred by comparing an attribute of the sensor data with a selected criterion; and
sending, in response to detecting the event, information corresponding to the event to an activation function of a network interface component (NIC) in an edge appliance to activate a bit-stream corresponding to the event, the activation function, when executed, to send a network message to activate an accelerator corresponding to the bit-stream.

2. The method of claim 1, further comprising selecting the selected criterion based on ambient conditions at the sensor component.

3. The method of claim 1, wherein sending the network message includes sending the network message to a second sensor component to activate the second sensor component to capture further sensor data.

4. The method of claim 1, further comprising processing the captured sensor data in response to identifying that a previously established pattern has occurred using prior sensor data from the sensor.

5. The method of claim 1, further comprising registering a particular activation function rule including a rule identifier, an event type, a threshold associated with the activation function, an activation function identifier that is associated with the rule, and a set of peers to propagate the network message.

6. The method of claim 1, wherein the activation function sends the network message to an edge device including memory and a processor to implement image processing operations on the image.

7. The method of claim 1, further comprising registering a set of public keys for a set of peer devices.

8. The method of claim 1, wherein the selected criterion includes existence of an object or a threshold.

9. An apparatus for coordinating operations based on event occurrence, the apparatus comprising means for performing any of the methods of claims 1-8.

10. At least one machine-readable medium including instructions for coordinating operations on a client device, which when deployed and executed by a processor of the client device, cause the processor to perform operations of any of the methods of claims 1-8.

11. A device to coordinate operations based on event occurrence, the device comprising:
an image capture component to capture an image; and
processing circuitry to execute operations to:
process the image captured by the image capture component to determine whether an event has occurred;
detect that the event has occurred by comparing an attribute of the image with a selected criterion; and
send, in response to detecting the event, information corresponding to the event to an activation function of a network interface component (NIC) in an edge appliance to activate a bit-stream corresponding to the event, the activation function, when executed, to send a network message to activate an accelerator corresponding to the bit-stream.

12. The device of claim 11, wherein the processing circuitry is an integrated circuit.

13. The device of claim 12, wherein the integrated circuit is a field-programmable gate array (FPGA).

14. The device of claim 11, wherein the selected criterion is selected by the processing circuitry based on ambient conditions at the device.

15. The device of claim 11, wherein the activation function sends the network message to a second device to activate the second device to capture a second image.
